(19) Europäisches Patentamt
European Patent Office
Office européen des brevets

(11) Veröffentlichungsnummer: **0 001 109**
**B1**

(12) # EUROPÄISCHE PATENTSCHRIFT

(21) Anmeldenummer: 78100827.1

(22) Anmeldetag: 06.09.78

(51) Int. Cl.³: C 08 L 59/02, // F 16 C 33/20

(54) **Polyoxymethylen-Formmassen mit verbesserten Gleiteigenschaften**

(30) Priorität: 12.09.77 DE 2741006

(43) Veröffentlichungstag der Anmeldung:
21.03.79 Patentblatt 79/06

(45) Bekanntmachung des Hinweises auf die Patenterteilung:
17.09.80 Patentblatt 80/19

(84) Benannte Vertragsstaaten:
DE FR GB

(56) Entgegenhaltungen:
US - A - 3 340 219
US - A - 4 041 002
CHEMICAL ABSTRACTS, Vol. 82, 99.247p (1975)
CHEMICAL ABSTRACTS, Vol. 83, 207. 142g (29/12/1975)

(73) Patentinhaber: BASF Aktiengesellschaft
Carl-Bosch-Strasse 38
D - 6700 Ludwigshafen (DE)

(72) Erfinder: Schmidt, Franz, Dr.
Trommstrasse 3
D - 6800 Mannheim 1 (DE)
Schuette, Wilhelm, Dr.
Frankstrasse 5
D - 6720 Speyer (DE)
Strickle, Erich
Max-von-Seubert-Strasse 62
D - 6800 Mannheim 51 (DE)
Rath, Hans Peter, Dr.
Friedhofstrasse 7
D - 6718 Gruenstadt 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 001 109 B1

Courier Press, Leamington Spa, England.

## Polyoxymethylen-Formassen mit verbesserten Gleiteigenschaften

Die Erfindung betrifft Polyoxymethylen - Formmassen mit verbesserten Gleiteigenschaften, die als Schmiermittel bestimmte Äther aus einem höheren Monoalkohol und einem Ätheralkohol enthalten.

Formteile aus Polyoxymethylen, z.B. Lagerelemente, die der Gleitreibung mit anderen Werkstoffen, insbesondere mit Metallteilen, ausgesetzt sind, müssen ein günstiges Gleitund Abriebverhalten zeigen. Dies läßt sich durch den Zusatz von Schmiermitteln erreichen. Die bekannten Schmiermittel weisen jedoch erhebliche Nachteil auf:

Molybdänsulfid verbessert das Abriebverhalten nicht genügend, so daß vor allem bei hohen Rauhigkeiten der Metallteile starker Verschleiß der Polyoxymethylene - Formteile auftritt.

Polytetrafluoräthylen ist ein verhältnismäßig teuerer Zusatzstoff, der außerdem die mechanischen Eigenschaften, insbesondere die Zugefestigkeit und die Dehnung der Polyoxymethylene - Formmassen, verschlechtert.

Andere Additive, wie Stearylalkohol oder Stearylal neigen zur Auswanderung und zum Ausschwitzen aus dem Polymeren, so daß die Schmiermittelwirkung im Laufe der Zeit nachläßt und auf dem Formteil sich ein unschöner Belag bildet.

In der DT—OS 22 62 788 sind Schmiermittel auf Basis von Fettsäureestern mehrwertiger Alkohols beschrieben. Auch diese Additive neigen noch zur Belagbildung. Vor allem aber ist der Gleitreibverschleiß bei Werkstoffen mit geringen Rauhigkeiten, die besonders in der Feinwerktechnik wichtig sind, noch zu hoch.

Aus der JP—OS 74 27.096 ist es bekannt, Aldehydpolymeren zur Verbesserung der thermischen Stabilität Polyoxyalkylenverbindungen, beispielsweise Polyoxyäthylenlauryläther zuzusetzen. In der JP—OS 75 103.556 ist der Zusatz von Polyalkylenglykoläthern aliphatischer Alkohole zur Verbesserung der Schlagzähigkeit von Polyacetalen beschrieben.

Der Erfindung lag die Aufgabe zugrunde, Polyoxymethylen - Formmassen mit verbesserten Gleiteigenschaften sowohl gegenüber Werkstoffen mit hoher als auch gegenüber solchen mit geringer Rauhigkeit zu entwickeln. Die Formassen sollen gut thermoplastisch verarbeitbar sein und nicht zur Belagbildung neigen.

Diese Aufgabe wird erfindungsgemäß gelöst durch den Zusatz von 0,3 bis 5, vorzugsweise von 0,5 bis 3 Gewichtsprozent eines Äthers der allgemeinen Formel I, II, III oder IV aus einem oder mehreren höheren Monoalkoholen und einem zweibis vierfunktionellen Ätheralkohol, der mindestens 1 Äthersauerstoffatom aufweist.

Der Monoalkohol ist dabei durch die Formel $R^1OH$ charakterisiert, in der $R^1$ ein linearer Alkylrest mit 10 bis 30 Kohlenstoffatomen ist, bevorzugt ein Rest des Stearylalkohols oder eines "Alfols", d.h. eines Alkohols, der durch Oligomerisation von Äthylen mit Aluminiumalkylen als Katalysatoren und anschließende Oxidation hergestellt wurde.

Die Ather haben vorzugsweise ein mittleres Molekulargewicht von größer als 300 und einen Schmelzpunkt zwischen 20 und 120°C.

Geeignete Äther sind Verbindungen der folgenden allgemeinen Formel I oder II:

$$R^1—O—(R^2)_n—H \qquad I$$

$$R^1—O—(R^2)_n—CH_2—O—R^1 \qquad II$$

wobei die Symbole folgende Bedeutung haben:
$R^1$ = linearer Alkylrest mit 10 bis 30 C-Atomen
$R^2$ = $CH_2—O—(CH_2)_2—O$ oder
$CH_2—O—(CH_2)_4—O$ ,
n = ganze Zahl zwischen 2 und 30.

Derartige Äther können beispielsweise hergestellt werden durch sauer katalysierte Oligomerisation der zyklischen Acetale 1,3-Dioxolan oder 1,3-Dioxepan in Gegenwart der Monoalkohole bzw. von Formalen der Monoalkohole als Regler. Das Molverhältnis zyklisher Acetale zu Monoalkohol liegt dabei bevorzugt zwischen 2:1 und 20:1. Als Katalysatoren können beispielsweise Perchlorsäure oder Bortrifluorid verwendet werden.

Weitere geeignete Äther sind Verbindung der allgemeinen Formel III:

$$R^3(O—CH_2—\underset{OR^1}{CH}—CH_2—O—R^1)_m \qquad III$$

wobei die Symbole folgende Bedeutung haben:
$R^1$ = linearer Alkylrest mit 10 bis 30 C-Atomen oder Wasserstoff, wobei mindestens ein $R^1$ im Molekül ein Alkylrest ist.
$R^3$ = zwei- bis vierfunktionelle linear oder verzweigte Kohlenwasserstoff-Gruppe mit 2 bis 6 C-Atomen
m = ganze Zahl zwischen 2 und 4, die der Wertigkeit von $R^3$ entspricht.

Diese Äther können hergestellt werden durch sauer katalysierte Addition der Monoalkohole an die entsprechenden Epoxidverbindungen, z.B. Butandioldiglyzidäther oder Glyzerintriglyzidäther.

Schließlich sind auch Äther der allgemeinen Formel IV geeignet:

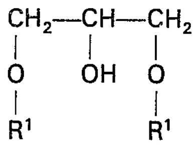

IV

wobei $R^1$ ein linearer Alkylrest mit 10 bis 30 C-Atomen ist. Enthält die allgemeine Formel mehr als einen Rest $R^1$, so können diese Reste in einem Molekül gleiche oder verschiedene Alkylreste sein. Die Äther können hergestellt werden durch Umsetzung von Alkanolglyzidäthern z.B. Stearylglyzidäther mit Monoalkoholen.

Polyoxymethylene im Sinne der vorliegenden Erfindung sind Homopolymere des Formaldehyds und Copolymere des Formaldehyds oder des Trioxans mit zyklischen und linearen Formalen, wie z.B. 1,3-Dioxolan, Dioxepan oder Epoxiden, wie Äthylenoxid oder Propylenoxid.

Die Homopolymeren sollen thermisch stabile Endgruppen, wie z.B.Ester- oder Äthergruppen besitzen. Die Copolymeren enthalten vorzugsweise mehr als 75% Oxymethylengruppen und mindestens 0,1% Gruppen des Comonomeren, durch welches 2 benachbarte Kohlenstoffatomen in die Kette eingeführt werden. Solche Copolymehre können in bekannter Weise durch kationische Copolymerisation von Trioxan mit geeigneten Comonomeren, z.B. zyklischen Äthern oder Acetalen, wie Äthylenoxid, Propylenoxid, 1,3-Dioxan, 1,3-Dioxolan, 1,3-Dioxepan oder mit linearen Oligo- oder Polyformalen oder -acetalen, wie Polydioxolan, Polydioxepan hergestellt werden.

Die Polymeren können die üblichen Stabilisatoren gegen Wärme und Licht sowie sonstige Zuschläge, wie z.B. Farbstoffe, Füllstoffe und Verstärkungsmittel enthalten. Die Einarbeitung der Schmiermittel erfolgt zweckmäßig zusammen mit sonstigen Zusätzen nach bekannten Verfahren, z.B. durch Mischen auf einem geeigneten Extruder oder Kneter, vorzugsweise bei Temperaturen zwischen 180 und 240°C. Außer den erfindungsgemäßen Gleitmitteln können sie noch herkömmliche Zusatzstoffe wie Molybdänsulfid, Kieselsäure, Erdalkalisalze oder Talkum enthalten.

Die Messung der Gleitreibzahl und des Gleitverschleisses erfolgte nach folgender Methode:

Ein zylindrischer Polyoxymethylen-Prüfstab einer Länge von 10 + 0,1 mm, einen oberen Durchmesser von 6 mm, der an der Auflagefläche des Zylinders 1 mm hoch auf 3 mm Durchmesser abgedreht ist, wird auf eine mit einer Geschwindigkeit von 0,5 m/s rotierende Metallscheibe (Oberflächenrauhtiefe 0,1 bis 0,2 $\mu$m) mit einer Belastung von 1 N/mm² gedrückt. Zur Bestimmung des Gleitverschleisses wird die Längenabnahme und der Gewichtsverlust des Prüfstiftes nach einem Lauf von 20 km gemessen. Zur Bestimmung der Gleitreibzahl wird die Reibkraft durch eine berührungsfreie Weglängenbestimmung mit induktiven Weggebern ermittelt, wobei die Auslenkung des Biegestabs, an dem der Prüfkörper befestigt ist, bei Bewegung der Scheibe bezogen auf die Ruhelag, gemessen wird. Die Federkonstante des Biegestabs liefert dann eine direkte Umrechnung von Weg auf Kraft. Das Verhältnis von Reibkraft zur Belastung des Prüfkörpers ergibt den Gleitreibwert $\mu$.

Die in den Beispielen genannten Teile und Prozente beziehen sich auf das Gewicht.

Beispiel 1

Dioxolan und Stearylal werden im molaren Verhältnis von 10 : 1 mit 200 ppm $HClO_4$ oligomerisiert. Bei Katalysatorzugabe steigt die Temperatur auf 70°C. Man erhöht die Temperatur auf 90°C und hält diese etwa 1 h, neutralisiert den Katalysator mit dem zweifachen Äquivalent an 1%iger NaOH und destilliert das Restmonomere ab. Der Destillationsrückstand ist eine wachsartige Substanz mit einem Schmelzpunkt von 60 bis 70°C. Der mittlere Oligomerisierungsgrad beträgt 10.

1% dieses Äthers (Acetal) wird in ein pulverförmiges Polyoxymethylen, hergestellt aus 96,9 Teilen Trioxan und 3 Teilen Dioxolan (Schmelzindex 9), zusammen mit 0,1% Polyamid und 0,5% 2,2′ - Methylen - bis - 4 - methyl - 6 - tert. - butylphenol eingemischt und auf einem Zweischneckenextruder aufgeschmolzen, extrudiert und granuliert.

Das Granulat wird zu Halbzeug verarbeitet, aus dem die Prüfkörper herausgearbeitet werden. Diese Prüfkörper werden dann auf ihr Gleitriebverhalten hin untersucht. Die Ergebnisse sind in Tabelle 1 zusammengefaßt.

Beispiel 2

a) Wie Beispiel 1, jedoch unter Verwendung eines stabilisierten, granulierten Trioxan - Homopolymerisats mit 0,75% Polyamid und 0,5% 2,2′ - Methylen - bis - 4 - methyl - 6 - tert. - butylphenol.

b) Wie Beispiel 2 a), jedoch wird als Gleitmittel entsprechend dem Stand der Technik DOS 22 62 788) 1% Äthylenglykoldistearat eingesetzt.

Beispiel 3

Wie Beispiel 1, jedoch wird der Äther hergestellt aus 1,3-Dioxepan und Stearylalkohol im molaren Verhältnis 20 : 1.

Beispiel 4

Wie Beispiel 3, jedoch molares Verhältnis 10 : 1.

Beispiel 5

Wie Beispiel 1, jedoch wird der Äther aus Butandioldiglycidäther und Stearylalkohol im molaren Verhältnis 1 : 1 hergestellt.

Zur Addition löst man Stearylalkohol in Toluol, so daß nach Zugabe des Epoxids eine 50%ige Lösung entsteht. Dann erhitzt man auf 70°C, so daß eine klare Lösung entsteht. Man

gibt 3% $BF_3$ - Dibutylätherat zu (bezogen auf Feststoff) und tropft das Epoxid so zu, daß sich die Temperatur ohne Heizung auf 60 bis 70°C hält. Nach beendeter Zugabe läßt man 1 Stunde bei 90 bis 100°C nachreagieren. Dann hydrolysiert man die verbliebenen Peroxidgruppen durch einstündige Behandlung mit 10% Wasser bei 95°C und zerstört mit der äquivalenten Menge NaOH den Katalysator, treibt das Wasser ab und filtriert über einen Druckfilter die anorganischen Bestandteile ab. Das Filtrat wird weitgehend zur Trocknung eingeengt oder auch in Lösung zur Abmischung mit dem Polymethylen verwendet.

Beispiel 6

Wie Beispiel 5, wobei jedoch ein molares Verhältnis von Epoxid : Alkohol von 1 : 2 angewandt wird. Dadurch entfällt die Hydrolyse überschüssiger Epoxidgruppen.

Beispiel 7

Wie Beispiel 1, jedoch Äther aus Stearylalkohol und Stearylglycidäther im molaren Verhältnis 1 : 1.

TABELLE 1

Gleitverschleißtest am Stift-Scheibe-System bei einer Flächenpressung von 1 N/mm² einer Geschwindigkeit von 0,5 m/s und einer Flächentemperatur $\nu$<40°C sowie einer Gleitstrecke von 20 km Rauhigkeit des Gleitreibpartners 0,1 bis 0,2 $\mu$m.

| Beispiel | Gleitreibung $\mu$ 0,1 bis 0,2 $\mu$m | Gleitverschleiß $\Delta$s 0,1 bis 0,2 $\mu$m |
|---|---|---|
| 1 | 0,47 | 0,30 |
| 2a | 0,41 | 0,68 |
| 2b+) | 0,60 | 0,70 |
| 3 | 0,47 | 0,20 |
| 4 | 0,34 | 0,70 |
| 5 | 0,49 | 0,16 |
| 6 | 0,44 | 0,43 |
| 7 | 0,39 | 0,70 |

+) Vergleichsbeispiel

**Patentanspruch**

Polyoxymethylen-Formmassen mit verbesserten Gleiteigenschaften, enthaltend 0,3 bis 5 Gewichtsprozent eines gegebenenfalls Hydroxylgruppen tragenden Äthers, *dadurch gekennzeichnet,* daß der Äther eine Verbindung der Allgemeinen Formel

$$R^1—O—(R^2)_n—H \qquad I$$

oder

$$R^1—O—(R^2)_n—CH_2—O—R^1 \qquad II$$

ist, wobei die Symbole folgende Bedeutung haben:

$R^1$ = linearer Alkyrest mit 10 bis 30 C-Atomen;
$R^2$ = $CH_2—O—(CH_2)_2—O$, oder $CH_2—O—(CH_2)_4—O$;
n = ganze Zahl zwischen 2 und 30,

oder eine Verbindung der allgemeinen Formel

$$R^3—(O—CH_2—\underset{\underset{OR^1}{|}}{CH}—CH_2—O—R^1)_m \qquad III$$

wobei die Symbole folgende Bedeutung haben:

$R^1$ = linearer Alkylrest mit 10 bis 30 C-Atomen oder Wasserstoff, wobei jedoch mindestens ein $R^1$ im Molekül ein Alkylrest ist.
$R^3$ = zwei- bis vierfunktionelle lineare oder verzweigte Kohlenwasserstoff - Gruppe mit 2 bis 6 C-Atomen
m = ganze Zahl zwischen 2 und 4, die der Wertigkeit von $R^3$ entspricht,

oder eine Verbindung der allgemeinen Formel

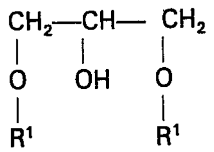

IV.

wobei $R^1$ ein linearer Alkylrest mit 10 bis 30 C-Atomen ist.

## Revendication

Matières à mouler à base de polyoxyméthylène, dotées de caractéristiques améliorées de glissement, contenant 0,3 à 5% en poids d'un éther portant le cas échéant des groupes hydroxyles, caractérisées en ce que l'éther est un composé de formule générale

$$R^1—O—(R^2)_n—H \quad (I)$$

ou

$$R^1—O—(R^2)_n—CH_2—O—R^1 \quad (II)$$

les symbols ayant les significations suivantes
$R^1$ = radical alcoyle linéaire contenant 10 à 30 atomes de C
$R^2$ = $CH_2—O—(CH_2)_2—O$ ou $CH_2—O—(CH_2)_4—O$
n = nombre entier de 2 à 30,
ou un composé de formule générale

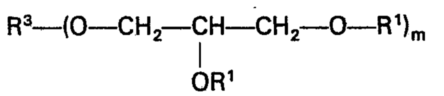

(III)

le symboles ayant les significations suivantes
$R^1$ = radical alcoyle linéaire contenant 10 à 30 atomes de C ou hydrogène, un $R^1$ au moins dans la molécule étant un radical alcoyle
$R^3$ = Groupe hydrocarbure linéaire ou ramifié présentant deux à quatre fonctions et contenant 2 à 6 atomes de C
m = Nombre entier de 2 à 4, correspondant à la valence de $R^3$, ou un composé de formule générale

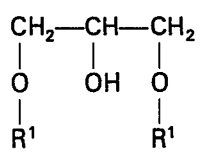

(IV)

$R^1$ étant un radical alcoyle linéaire contenant 10 à 30 atomes de C.

## Claim

Polyoxymethylene moulding compositions with improved slip properties, containing 0.3 to 5 percent by weight of an ether optionally bearing hydroxyl groups, *characterized in that* the ether is a compound of the general formula

$$R^1—O—(R^2)_n—H \quad I$$

or

$$R^1—O—(R^2)_n—CH_2—O—R^1 \quad II$$

where the various symbols have the following meanings:
$R^1$ = linear alkyl of 10 to 30 carbon atoms;
$R^2$ = $CH_2—O—(CH_2)_2—O$ or $CH_2—O—(CH_2)_4—O$;
n = one of the integers 2 to 30,
or a compound of the general formula

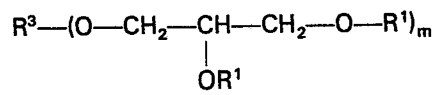

III

where the various symbols have the following meanings:
$R^1$ = linear alkyl of 10 to 30 carbon atoms or hydrogen, at least one radical $R^1$ in the molecule being alkyl;
$R^3$ = bi- to tetrafunctional linear or branched hydrocarbon group of 2 to 6 carbon atoms
m = one of the integers 2 to 4 which corresponds to the functionality of $R^3$,
or a compound of the general formula

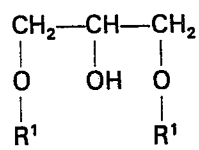

IV

where $R^1$ is a linear alkyl of 10 to 30 carbon atoms.